(19) Europäisches Patentamt
European Patent Office
Office européen des brevets

(11) EP 0 614 956 B1

(12) **FASCICULE DE BREVET EUROPEEN**

(45) Date de publication et mention de la délivrance du brevet:
**13.08.1997 Bulletin 1997/33**

(51) Int Cl.[6]: **C09D 167/02**, C09D 5/03

(21) Numéro de dépôt: **94870044.8**

(22) Date de dépôt: **09.03.1994**

# (54) Compositions thermodurcissables en poudre à base de polyesters et de copolymères acryliques

Wärmehärtbare pulverförmige Zusammensetzungen auf der Basis von Polyestern und Acrylcopolymeren

Thermosetting powder compositions based on polyesters and acrylic copolymers

(84) Etats contractants désignés:
**AT BE CH DE DK ES FR GB GR IE IT LI LU MC NL PT SE**
Etats d'extension désignés:
**SI**

(30) Priorité: **11.03.1993 GB 9304940**

(43) Date de publication de la demande:
**14.09.1994 Bulletin 1994/37**

(73) Titulaire: **U C B, S.A.**
**1050 Bruxelles (BE)**

(72) Inventeurs:
- **Moens, Luc**
  **B-1640 Sint-Genesius-Rode (BE)**
- **Maetens, Daniel**
  **B-1080 Bruxelles (BE)**
- **Dallons, Jean-Luc**
  **B-1600 Sint-Pieters-Leeuw (BE)**
- **Loutz, Jean-Marie**
  **B-1180 Bruxelles (BE)**

(74) Mandataire: **Dusseldorp, Raymond**
**UCB S.A.**
**Département D.T.B.**
**33, rue d'Anderlecht**
**1620 Drogenbos (BE)**

(56) Documents cités:
**EP-A- 0 522 648** **FR-A- 2 309 596**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 614 956 B1

Printed by Jouve, 75001 PARIS (FR)

## Description

La présente invention se rapporte à des compositions thermodurcissables en poudre comprenant comme liant un mélange d'un polyester contenant des groupes carboxyle terminaux et d'un copolymère acrylique contenant des groupes glycidyle et en particulier à des compositions thermodurcissables en poudre qui donnent des revêtements qui possèdent d'excellentes propriétés mécaniques et une résistance aux intempéries remarquable.
L'invention se rapporte également à l'utilisation de ces compositions pour la préparation de peintures et vernis en poudre à partir de ces compositions.

Les compositions thermodurcissables en poudre sont bien connues dans l'état de la technique et sont largement utilisées comme peintures et vernis pour le revêtement d'objets les plus divers. Les avantages de ces poudres sont nombreux ; d'une part le problème des solvants est complètement supprimé, d'autre part les poudres sont utilisées à 100%, vu que seule la poudre en contact direct avec le substrat est retenue par celui-ci, l'excès de poudre étant, en principe, intégralement récupérable et réutilisable. C'est pourquoi ces compositions en poudre sont préférées par rapport aux compositions de revêtement se présentant sous la forme de solutions dans un solvant organique.

Les compositions thermodurcissables en poudre ont déjà trouvé un large débouché dans l'enduction des appareils électroménagers, des accessoires de l'industrie automobile, etc.. Elles contiennent généralement un liant organique thermodurcissable, des charges, des pigments, des catalyseurs et des additifs divers pour adapter leur comportement à leur utilisation.

Il existe différents types de compositions thermodurcissables en poudre. Les compositions les plus connues contiennent comme liant soit un mélange de polymères contenant des groupes carboxyle tels qu'un polyester ou un polyacrylate carboxylé et de composés époxydés, comme l'isocyanurate de triglycidyle, des copolymères acryliques contenant des groupes glycidyle ou des β-hydroxyalkylamides, soit un mélange de polymères contenant des groupes hydroxyle, le plus souvent un polyester hydroxylé, avec des isocyanates bloqués ou non, des résines de mélamine, etc.

Les polyesters contenant des groupes carboxyle utilisables pour la préparation de vernis et peintures en poudre ont déjà fait l'objet de nombreuses publications sous la forme d'articles et de brevets. Dans la littérature des brevets on citera notamment les brevets américains 4.085.159 et 4.147.737. Ces polyesters sont habituellement préparés à partir d'acides dicarboxyliques aromatiques, principalement l'acide téréphtalique et isophtalique et éventuellement une faible proportion d'acides dicarboxyliques aliphatiques ou cycloaliphatiques, et à partir de polyols aliphatiques divers comme par exemple l'éthylène glycol, le néopentyl glycol, le 1,6-hexanediol, le triméthylolpropane, etc. Ces polyesters présentent généralement un indice d'acide de 15 à 100 mg de KOH/g de polyester. Ces polyesters à base d'acides dicarboxyliques aromatiques, sont le plus souvent utilisés avec de l'isocyanurate de triglycidyle comme agent de réticulation, et ils fournissent des compositions thermodurcissables donnant des enduits de peinture ou de vernis possédant de bonnes propriétés tant en ce qui concerne leur aspect qu'en ce qui concerne leurs propriétés mécaniques (résistance au choc, flexibilité, etc.).

Toutefois, tout récemment on s'est rendu compte que l'utilisation de l'isocyanurate de triglycidyle dans les peintures en poudre pose des problèmes de toxicité. C'est la raison pour laquelle on cherche actuellement à remplacer l'isocyanurate de triglycidyle par d'autres agents de réticulation plus inoffensifs.

On attend naturellement de ces autres agents de réticulation qu'ils fournissent des compositions thermodurcissables donnant des enduits de peinture et de vernis possédant des propriétés physiques et chimiques au moins égales, sinon supérieures aux propriétés des revêtements obtenus au départ de compositions thermodurcissables à base de l'isocyanurate de triglycidyle et de polyesters contenant des groupes carboxyle.

Parmi les divers agents de réticulation pouvant être utilisés en remplacement de l'isocyanurate de triglycidyle, les copolymères acryliques contenant des groupes glycidyle occupent une place privilégiée. En effet, les revêtements obtenus à partir de compositions thermodurcissables en poudre à base de polyesters contenant des groupes carboxyle et de copolymères acryliques possèdent en général une excellente résistance aux intempéries. Malheureusement, les propriétés mécaniques des revêtements obtenus avec ces compositions, entre autres la résistance au choc, laissent à désirer.

Dans le brevet européen 38.635, on décrit une composition thermodurcissable en poudre qui contient essentiellement de 60 à 97% en poids d'une résine de polyester linéaire ayant un indice d'acide de 15 à 200 mg de KOH/g, et de 3 à 40% en poids d'un copolymère acrylique contenant des groupes glycidyle ayant un poids moléculaire moyen en nombre de 300 à 5.000. Les composants acides servant à la préparation du polyester sont des acides carboxyliques conventionnels connus, tels que l'acide téréphtalique, l'acide isophtalique, l'acide adipique, l'acide trimellitique etc. et les composants alcooliques sont des diols aliphatiques conventionnels, par exemple le néopentyl glycol, l'éthylène glycol, le 1,6-hexanediol, etc.

Le copolymère acrylique contenant des groupes glycidyle est de préférence constitué de 40 à 80% en poids d'au moins un (méth)acrylate de (β-méthyl)glycidyle et de 20 à 60% en poids d'un autre monomère vinylique tel que le styrène et les esters d'acides (méth)acryliques. Les revêtements obtenus au moyen des compositions thermodurcissables décrites dans ce brevet présentent des caractéristiques de surface améliorées, notamment une surface lisse

et brillante et une remarquable résistance aux intempéries. Cependant, les propriétés mécaniques sont insuffisantes ; dans le meilleur des cas, la résistance au choc ne dépasse pas 50 kg.cm.

Il subsiste donc un besoin de trouver des compositions thermodurcissables en poudre, qui, à la différence notamment de la composition thermodurcissable en poudre du brevet européen 38.635 cité ci-dessus, donnent des revêtements possédant de bonnes propriétés mécaniques, tout en conservant les excellentes caractéristiques de surface et de résistance aux intempéries déjà obtenues et sans devoir recourir à des agents de réticulation qui nécessitent des précautions à la manipulation, au transport et à l'usage à cause de leur toxicité. On a maintenant fait la découverte surprenante que des compositions thermodurcissables en poudre donnant des enduits de peinture et de vernis possédant des propriétés mécaniques nettement améliorées et en même temps une excellente résistance aux intempéries peuvent être obtenues à partir d'un polyester contenant des groupes carboxyle et d'un copolymère acrylique contenant des groupes glycidyle comme agent de réticulation, à la condition que le polyester présente les caractéristiques suivantes :

- sa préparation se fait obligatoirement en deux stades en commençant par la préparation d'un polyester contenant des groupes hydroxyle au départ d'au moins un acide polycarboxylique autre que l'acide 1,4-cyclohexanedicarboxylique et d'au moins un polyol, et en estérifiant ensuite les groupes hydroxyle de ce polyester avec de l'acide 1,4-cyclohexanedicarboxylique exclusivement ;
- sa composition est très spécifique, en l'occurrence son constituant acide comprenant obligatoirement au moins 75 moles % d'acide téréphtalique, au moins 10 moles % d'acide 1,4-cyclohexanedicarboxylique et au plus 14 moles % d'au moins un autre acide polycarboxylique aromatique et/ou aliphatique et/ou cycloaliphatique.

Dès lors, la présente invention a pour objet des compositions thermodurcissables en poudre comprenant

(a) un polyester contenant des groupes carboxyle terminaux caractérisé en ce que

(1) il présente un indice d'acide de 15 à 70 mg de KOH/g ;
(2) il est préparé en deux stades, en préparant d'abord dans un premier stade un polyester contenant des groupes hydroxyle terminaux à partir d'au moins un acide polycarboxylique autre que l'acide 1,4-cyclohexanedicarboxylique et d'au moins un polyol aliphatique ou cycloaliphatique, et en estérifiant ensuite dans un deuxième stade le polyester contenant des groupes hydroxyle terminaux ainsi obtenu avec de l'acide 1,4-cyclohexanedicarboxylique exclusivement ; et (3) il contient au moins 75 moles % d'acide téréphtalique, au moins 10 moles % d'acide 1,4-cyclohexanedicarboxylique et au plus 14 moles % d'au moins un autre acide polycarboxylique aromatique et/ou aliphatique et/ou cycloaliphatique, par rapport au total des acides carboxyliques entrant dans sa composition ; et,

(b) un copolymère acrylique contenant des groupes glycidyle.

Le polyester (a) des compositions thermodurcissables conformes à l'invention est un polyester contenant des groupes carboxyle terminaux qui présente un indice d'acide de 15 à 70 mg de KOH/g.

Une caractéristique essentielle du polyester (a) contenant des groupes carboxyle terminaux réside dans sa synthèse en deux stades. Dans le premier stade de cette synthèse, on prépare un polyester contenant des groupes hydroxyle terminaux qui est constitué en majeure partie d'acide téréphtalique et d'un ou plusieurs polyols aliphatiques. Dans ce premier stade, on peut éventuellement ajouter une quantité mineure d'au moins un autre acide polycarboxylique aromatique et/ou aliphatique et/ou cycloaliphatique, mais on n'utilise pas d'acide 1,4-cyclohexanedicarboxylique.

Dans le deuxième stade de cette synthèse, on fait réagir ce polyester contenant des groupes hydroxyle terminaux avec de l'acide 1,4-cyclohexanedicarboxylique comme seul acide.

Toutefois, parmi ces polyesters, seuls peuvent convenir pour les buts de la présente invention, ceux qui contiennent la teneur requise en acide téréphtalique et en acide 1,4-cyclohexanedicarboxylique.

C'est pourquoi une autre caractéristique essentielle du polyester (a) est que son constituant acide contient au moins 75 moles % d'acide téréphtalique, au moins 10 moles % d'acide 1,4-cyclohexanedicarboxylique et au plus 14 moles % d'au moins un acide polycarboxylique aromatique et/ou aliphatique et/ou cycloaliphatique autre que l'acide 1,4-cyclohexanedicarboxylique et l'acide téréphtalique, par rapport au total des acides carboxyliques entrant dans sa composition.

Selon une forme de réalisation préférée de l'invention, le polyester (a) contenant des groupes carboxyle terminaux contient 75 à 90 moles % d'acide téréphtalique et 10 à 25 moles % d'acide 1,4-cyclohexanedicarboxylique par rapport au total des acides carboxyliques.

On a trouvé de manière inattendue que l'on obtient ainsi un polyester dont la chaîne est terminée par de l'acide 1,4-cyclohexanedicarboxylique qui, lorsqu'il est utilisé avec un copolymère acrylique contenant des groupes glycidyle,

fournit des compositions thermodurcissables en poudre donnant des revêtements dont les propriétés mécaniques sont nettement supérieures à celles qu'on obtient avec des compositions thermodurcissables de l'état de la technique à base de polyesters dont la chaîne est terminée par de l'acide isophtalique, de l'acide adipique ou de l'anhydride maléique, comme par exemple ceux décrits dans le brevet européen 38.635.

L'acide 1,4-cyclohexanedicarboxylique a déjà été proposé pour la préparation de polyesters contenant des groupes carboxyle intervenant dans la préparation de compositions thermodurcissables en poudre. C'est ainsi que dans les demandes de brevet européen 389.926 et 522.648, on décrit des compositions pour peinture en poudre comprenant un composé polyépoxydé, une résine de polyester et des additifs habituels la résine de polyester présente un indice d'acide de 15 à 100 mg de KOH/g et un indice d'hydroxyle inférieur à 10 mg de KOH/g et est essentiellement à base d'unités d'acides dicarboxyliques, de glycols et de monomères de fonctionnalité 3 ou plus élevée ; en ce qui concerne ces acides dicarboxyliques, on impose qu'il y ait au moins 15 moles % d'acide isophtalique et au moins 5 moles % d'acide 1,4-cyclohexanedicarboxylique par rapport au total des acides dicarboxyliques. Dans la demande de brevet européen 389.926, de très bons résultats sont signalés avec un polyester à base de 45 à 65 moles % d'acide téréphtalique, 15 à 35 moles % d'acide isophtalique et 15 à 30 moles % d'acide 1,4-cyclohexanedicarboxylique. Le composé polyépoxydé utilisé comme agent de réticulation peut être l'isocyanurate de triglycidyle, le téréphtalate de diglycidyle ou son dérivé hexahydrogéné, ou bien un copolymère acrylique contenant des groupes glycidyle. Toutefois, il n'est question nulle part du polyester très spécifique utilisé conformément à la présente invention, ce qui fait que les avantages de la composition thermodurcissable en poudre de la présente invention n'ont pas pu être mis en évidence. Contrairement aux polyesters utilisés dans les demandes de brevet européen précitées, les polyesters spécifiques contenant des groupes carboxyle terminaux utilisés selon la présente invention ont une chaîne polymère qui est toujours terminée par de l'acide 1,4-cyclohexanedicarboxylique et le constituant acide doit contenir au moins 75 moles % d'acide téréphtalique et au plus 14 moles % d'acide isophtalique. On a constaté en effet que, lorsque le polyester (a) contient moins de 75 moles % d'acide téréphtalique et que sa teneur en acide isophtalique est supérieure à 14 moles % par rapport au total des acides carboxyliques, on obtient des revêtements qui présentent une résistance au choc direct et inverse nettement moins bonne (voir l'exemple 16 ci-après).

Comme indiqué plus haut, la préparation du polyester (a) contenant des groupes carboxyle terminaux se fait obligatoirement en deux stades.

Le constituant acide servant à la préparation du polyester contenant des groupes hydroxyle terminaux au premier stade est constitué principalement d'acide téréphtalique. Selon l'invention, il est absolument nécessaire que la quantité d'acide téréphtalique soit d'au moins 75 moles %, et de préférence de 75 à 90 moles % par rapport au total des acides carboxyliques entrant dans la composition du polyester (a) contenant des groupes carboxyle terminaux. D'autres acides polycarboxyliques aromatiques et/ou aliphatiques et/ou cycloaliphatiques, à l'exception toutefois de l'acide 1,4-cyclohexanedicarboxylique peuvent éventuellement être utilisés pour la préparation du polyester contenant des groupes hydroxyle terminaux. A titre d'exemple, on peut citer l'acide succinique, l'acide glutarique, l'acide adipique, l'acide fumarique, l'acide maléique, l'acide isophtalique, l'acide 1,2-cyclohexanedicarboxylique, l'acide 1,3-cyclohexanedicarboxylique et leurs anhydrides correspondants, seuls ou en mélange. Pour la préparation de polyesters ramifiés on utilise, en outre, avantageusement un acide tri- ou polycarboxylique comme, par exemple, l'acide ou l'anhydride trimellitique, le dianhydride pyromellitique, l'acide trimésique, l'acide pyromellitique, etc. Selon l'invention, la quantité de ces autres acides polycarboxyliques n'excédera toutefois pas 14 moles % par rapport au total des acides carboxyliques entrant dans la composition du polyester (a) contenant des groupes carboxyle terminaux.

Le constituant alcoolique servant à la préparation du polyester contenant des groupes hydroxyle terminaux au premier stade est un polyol aliphatique à chaîne droite ou ramifiée ou un polyol cycloaliphatique ayant, de préférence, de 2 à 15 atomes de carbone. Ces polyols peuvent être choisis parmi des glycols ou des polyols tels que l'éthylène glycol, le diéthylène glycol, le 1,2-propanediol, le 1,3-propanediol, le 1,4-butanediol, le 2-méthyl-1,3-propanediol, le néopentyl glycol, le 1,5-pentanediol, le 3-méthyl-1,5-pentanediol, le 2-butyl-2-éthyl-1,3-propanediol, le 1,6-hexanediol, le 1,4-cyclohexanediméthanol, le 1,4-cyclohexanediol, l'hydroxypivalate de néopentyl glycol et le bisphénol A hydrogéné, seuls ou en mélange.

Pour la préparation de polyesters ramifiés on utilise, en outre, avantageusement des polyols trihydroxylés ou tétrahydroxylés, tels que le triméthylolpropane, le ditriméthylolpropane, le pentaérythritol, etc.

Les mélanges de néopentyl glycol et de polyols aliphatiques tri- et/ou tétrahydroxylés peuvent être utilisés selon la présente invention ; le néopentyl glycol permet d'obtenir une température de transition vitreuse appropriée et facilite l'obtention d'une bonne viscosité à l'état fondu de la poudre, tandis que le polyol tri- ou tétrahydroxylé permet d'obtenir un polyester de fonctionnalité supérieure à deux.

Le polyester contenant des groupes hydroxyle terminaux est préparé selon les procédés conventionnels. On utilise généralement un excès de 7 à 40 équivalents % du constituant alcoolique par rapport au constituant acide ; on obtient ainsi un polyester dont l'indice d'hydroxyle peut varier entre 30 et 150 mg de KOH/g de polyester. La fonctionnalité de ce polyester est, de préférence, comprise entre 2 et 3.

Selon l'invention, on prépare ensuite dans un deuxième stade le polyester (a) contenant des groupes carboxyle

terminaux en faisant réagir le polyester contenant des groupes hydroxyle obtenu au premier stade avec l'acide 1,4-cyclohexanedicarboxylique ; en général, cet acide est présent sous forme d'un mélange des isomères cis et trans.

Le polyester (a) contenant des groupes carboxyle terminaux est préparé en utilisant un excès de l'acide 1,4-cyclohexanedicarboxylique par rapport au polyester à groupes hydroxyle terminaux ; cet excès est généralement de 10 à 60 équivalents %.

Pour obtenir un polyester (a) dont la chaîne est terminée par de l'acide 1,4-cyclohexanedicarboxylique, il faut que la quantité d'acide 1,4-cyclohexanedicarboxylique soit d'au moins 10 moles %, de préférence de 10 à 25 moles % par rapport au total des acides carboxyliques entrant dans la composition du polyester (a) contenant des groupes carboxyle terminaux.

On obtient finalement un polyester contenant des groupes carboxyle terminaux dont l'indice d'acide est de 15 à 70 mg de KOH/g de polyester. Ce polyester présente une fonctionnalité qui est, de préférence, comprise entre 2 et 3.

Pour la préparation des polyesters, on utilise en général un réacteur classique muni d'un agitateur, d'une entrée de gaz inerte (azote), d'un thermocouple, d'une colonne de distillation reliée à un condenseur refroidi à l'eau, d'un séparateur d'eau et d'un tube de raccordement au vide.

Les conditions d'estérification utilisées pour la préparation des polyesters sont classiques, à savoir que l'on peut utiliser un catalyseur d'estérification usuel, tel que l'oxyde de dibutylétain, le dilaurate de dibutylétain, le trioctanoate de n-butylétain, l'acide sulfurique ou un acide sulfonique à raison de 0,05 à 0,5% en poids des réactifs, et ajouter éventuellement des stabilisants de la couleur, par exemple des antioxydants phénoliques tel que l'IRGANOX 1010 (CIBA-GEIGY Corp.) ou des stabilisants de type phosphonite et phosphite tel que le phosphite de tributyle.

La polyestérification est généralement effectuée à une température que l'on augmente progressivement de 130°C à environ 190 à 250°C, d'abord sous la pression normale, puis sous pression réduite à la fin de chaque stade du procédé, en maintenant ces conditions opératoires jusqu'à obtention d'un polyester présentant l'indice d'hydroxyle et/ou d'acide désiré. Le degré d'estérification est suivi par détermination de la quantité d'eau formée au cours de la réaction et des propriétés du polyester obtenu, par exemple l'indice d'hydroxyle, l'indice d'acide, le poids moléculaire ou la viscosité.

Lorsque la polyestérification est terminée, on ajoute éventuellement au polyester encore à l'état fondu des catalyseurs de réticulation qui facilitent la réaction entre les groupes carboxyle du polyester et les groupes glycidyle du copolymère acrylique. Ces catalyseurs sont ajoutés dans le but d'accélérer la réticulation de la composition thermodurcissable en poudre lors de sa cuisson. A titre d'exemples de tels catalyseurs, on citera les amines (p.ex. 2-phénylimidazoline), les phosphines (p.ex. triphénylphosphine), les sels d'ammonium (p.ex. bromure de tétrabutylammonium ou chlorure de tétrapropylammonium), et les sels de phosphonium (p.ex. bromure d'éthyltriphénylphosphonium ou chlorure de benzyltriphénylphosphonium). On utilise ces catalyseurs, de préférence, à raison de 0 à 1% en poids par rapport au poids du polyester.

Au terme de la synthèse, le polyester contenant des groupes carboxyle terminaux est coulé en une couche épaisse, on le laisse refroidir et on le broie en grains ayant une dimension moyenne allant d'une fraction de 1 mm à quelques mm.

Les polyesters (a) contenant des groupes carboxyle terminaux utilisables selon l'invention sont des produits solides qui possèdent un poids moléculaire moyen en nombre compris entre 1.500 et 12.000 déterminé par chromatographie d'exclusion avec le tétrahydrofuranne comme agent d'élution. A l'état liquide, ces produits présentent une viscosité mesurée à 200°C au moyen d'un viscosimètre cône/plateau (connu sous le nom de "viscosité ICI") allant de 0,1 à 15 Pa.s.

Le copolymère acrylique (b) contenant des groupes glycidyle des compositions thermodurcissables en poudre conformes à l'invention est obtenu à partir de méthacrylate de glycidyle et/ou d'acrylate de glycidyle, d'au moins un monomère (méth)acrylique et éventuellement d'un monomère éthyléniquement mono-insaturé différent du (méth)acrylate de glycidyle et du monomère (méth)acrylique.

Le monomère (méth)acrylique est choisi dans le groupe consistant en les esters alkylés d'un acide carboxylique α,β-éthyléniquement insaturé répondant à la formule

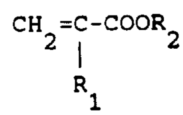

dans laquelle

$R_1$ est de l'hydrogène ou un radical méthyle, et
$R_2$ représente un radical alkyle contenant de 1 à 18 atomes de carbone, de préférence 1 à 6 atomes de carbone.

Comme exemples de monomères (méth)acryliques on citera les esters alkylés de l'acide acrylique ou de l'acide méthacrylique tels que l'acrylate d'éthyle, de butyle, d'isobutyle, de 2-éthylhexyle, de lauryle, et le méthacrylate de méthyle, d'éthyle, de butyle, d'isobutyle et de lauryle.

Le monomère éthyléniquement mono-insaturé qui peut éventuellement être présent est de préférence choisi parmi le styrène, le vinyltoluène, le diméthylstyrène, l'$\alpha$-méthylstyrène, l'acrylate ou le méthacrylate d'hydroxyéthyle, l'acrylate ou le méthacrylate d'hydroxypropyle, l'acrylonitrile, l'acrylamide, l'acétate de vinyle, etc.. seuls ou en mélange.

Les copolymères acryliques (b) contenant des groupes glycidyle utilisables dans les compositions thermodurcissables conformes à la présente invention sont de préférence obtenus à partir d'environ 45 à 70% en poids de méthacrylate de glycidyle et/ou d'acrylate de glycidyle, d'environ 5 à 55% en poids de monomère (méth)acrylique et d'environ 0 à 25% en poids de monomère éthyléniquement mono-insaturé. On prépare ces copolymères acryliques par des méthodes connues en soi de polymérisation soit en masse, soit en émulsion, ou encore en solution dans un solvant organique. On copolymérise les monomères en présence d'un initiateur de radicaux libres tels que le peroxyde de benzoyle, le peroxyde de tert-butyle, le peroxyde de décanoyle, l'azo-bis-isobutyronitrile, etc.. en une quantité représentant de 0,1 à 5% en poids des monomères.

Les copolymères acryliques (b) préférés ont un poids moléculaire moyen en nombre ($\overline{M}n$) (déterminé par chromatographie d'exclusion avec le tétrahydrofuranne comme agent d'élution) compris entre 2.000 et 8.000. Pour obtenir un bon contrôle du poids moléculaire et de sa distribution, on ajoute au cours de la polymérisation un agent de transfert de chaîne, de préférence du type mercaptan tel que le n-dodécylmercaptan, le t-dodécanethiol, l'isooctylmercaptan, etc.. des halogénures, tel que le tétrabromure de carbone, des disulfures ou des thioéthers. On utilise l'agent de transfert de chaîne en une quantité comprise entre 0 et 10% en poids des monomères engagés dans la copolymérisation. Les copolymères acryliques possèdent de préférence un poids équivalent époxy (EEW) compris entre 125 et 1.500, avec plus de préférence entre 200 et 1.100 et avantageusement entre 200 et 600. La température de transition vitreuse (Tg) de ces copolymères acryliques est comprise entre 50 et 130°C, de préférence entre 50 et 85°C, déterminée selon la norme ASTM D3418. Comme exemple d'un de ces copolymères acryliques contenant des groupes glycidyle, on citera l'Estron 252 commercialisé par la société ESTRON CHEMICAL Inc.

Le polyester (a) contenant des groupes carboxyle terminaux et le copolymère acrylique (b) contenant des groupes glycidyle constituent conjointement le liant de base des compositions thermodurcissables en poudre utilisables notamment comme vernis et peintures se prêtant à une application suivant la technique de dépôt au moyen d'un pistolet pulvérisateur électrostatique ou tribo-électrique ou suivant la technique de dépôt en lit fluidisé.

Dès lors, la présente invention se rapporte en outre aux vernis et peintures en poudre obtenus à l'aide de ces compositions.

Enfin, elle se rapporte également à un procédé de revêtement d'un article, de préférence métallique, qui est caractérisé par l'application sur ledit article d'une composition thermodurcissable en poudre conforme à l'invention par dépôt par pulvérisation au pistolet électrostatique ou tribo-électrique ou par dépôt en lit fluidisé suivie d'une cuisson du revêtement ainsi obtenu à une température de 150 à 200°C, pendant une durée d'environ 10 à 30 minutes.

Le copolymère acrylique (b) contenant des groupes glycidyle peut être utilisé à raison de 1 à 4, de préférence de 1,5 à 3 équivalents de groupes époxy par équivalent de groupes carboxyle dans le polyester contenant des groupes carboxyle terminaux. La quantité du copolymère acrylique (b) varie selon la nature du copolymère et l'indice d'acide du polyester (a) ; les compositions thermodurcissables en poudre contiennent de 0,1 à 9, de préférence de 1,5 à 4 parties en poids du polyester (a) pour 1 partie en poids du copolymère acrylique (b).

Les compositions thermodurcissables en poudre conformes à l'invention peuvent par exemple contenir de 10 à 90%, de préférence de 60 à 80% en poids de polyester (a) et de 90 à 10%, de préférence de 40 à 20% en poids de copolymère acrylique (b) par rapport au poids total du polyester et du copolymère acrylique.

Pour la préparation des compositions thermodurcissables en poudre, on mélange de manière homogène le polyester contenant des groupes carboxyle terminaux, le copolymère acrylique contenant des groupes glycidyle et les diverses substances auxiliaires utilisées conventionnellement pour la fabrication de peinture et vernis en poudre. Cette homogénéisation est exécutée par exemple en fondant le polyester, le copolymère acrylique et les diverses substances auxiliaires à une température située dans l'intervalle de 90 à 100°C, de préférence dans une extrudeuse, par exemple une extrudeuse Buss-Ko-Kneter ou une extrudeuse à double vis de type Werner-Pfleiderer ou APV. Ensuite, on laisse refroidir l'extrudat, on le broie et on le tamise pour obtenir une poudre dont la dimension des particules est comprise entre 10 et 110 micromètres.

Les substances auxiliaires ajoutées éventuellement aux compositions thermodurcissables en poudre conformes à l'invention sont entre autres des composés absorbants les rayons ultraviolets comme le Tinuvin 900 (de CIBA-GEIGY Corp.), des stabilisants à la lumière à base d'amines à empêchement stérique (par exemple le Tinuvin 144 de CIBA-GEIGY Corp.), des antioxydants phénoliques (par exemple l'Irganox 1010 ou l'Irgafos P-EPQ de CIBA-GEIGY Corp.) et des stabilisants de type phosphonite ou phosphite. Les compositions conformes à l'invention peuvent en contenir jusqu'à 10% en poids par rapport au poids du liant. Une variété de pigments peut également être ajoutée aux compositions thermodurcissables conformes à l'invention. A titre d'exemples de pigments, on citera les oxydes métalliques

tels que le dioxyde de titane, l'oxyde de fer, l'oxyde de zinc, etc., les hydroxydes de métaux, les poudres métalliques, les sulfures, les sulfates, les carbonates, les silicates comme par exemple le silicate d'aluminium, le noir de carbone, le talc, les kaolins, les barytes, les bleus de fer, les bleus de plomb, les rouges organiques, les marrons organiques, etc.. On citera encore comme substances auxiliaires des agents régulateurs de fluidité comme le Resiflow PV5 (de WORLEE) ou le Modaflow (de MONSANTO), ou l'Acronal 4F (de BASF), des plastifiants comme le phtalate de dicyclohexyle, le phosphate de triphényle, des agents auxiliaires de broyage, des huiles siccatives, des agents de dégazage tels que la benzoïne et des charges. Ces substances auxiliaires sont utilisées en quantités usuelles, étant entendu que si les compositions thermodurcissables conformes à l'invention sont utilisées comme vernis, on omettra l'addition de substances auxiliaires ayant des propriétés opacifiantes.

Les peintures et vernis en poudre faisant l'objet de la présente invention sont destinés à être appliqués sur l'article à revêtir par les techniques traditionnelles, c'est-à-dire par application au pistolet pulvérisateur électrostatique ou triboélectrique ou par la technique bien connue du dépôt en lit fluidisé.

Après avoir été appliqués sur l'article concerné, les revêtements déposés sont durcis par cuisson au four à une température de 150 à 200°C, pendant une durée d'environ 10 à 30 minutes en vue d'obtenir la réticulation complète du revêtement.

Les exemples qui vont suivre illustrent l'invention sans la limiter. Dans ceux-ci, les parties sont en poids, sauf indication contraire.

Dans les tableaux I et II, les différents composés utilisés pour la préparation des polyesters selon l'invention et des polyesters introduits à titre comparatifs, sont désignés par les abréviations suivantes :

ATP : acide téréphtalique
AIP : acide isophtalique
ATM : anhydride trimellitique
Aad : acide adipique
CHDA : acide 1,4-cyclohexanedicarboxylique
NPG : néopentyl glycol
TMP : triméthylolpropane
EG : éthylène glycol
BPAH : bisphénol A hydrogéné

Exemple de référence 1. Préparation d'un polyester contenant des groupes carboxyle terminaux.

La préparation de ces polyesters a été effectuée en deux stades : dans le premier stade, on prépare un polyester contenant des groupes hydroxyle terminaux et dans le deuxième stade on estérifie le polyester hydroxylé ainsi obtenu avec de l'acide 1,4-cyclohexanedicarboxylique.

1er stade.

Dans un réacteur classique muni d'un agitateur, d'une entrée de gaz inerte (azote), d'un thermocouple, d'une colonne adiabatique, d'un condenseur, d'un séparateur d'eau et d'un tube de raccordement au vide, on introduit 428,5 parties de néopentyl glycol. On chauffe à 130°C jusqu'à ce que le glycol soit fondu et on introduit alors dans le réacteur 616 parties d'acide téréphtalique, 2,3 parties de dilaurate de dibutylétain comme catalyseur d'estérification et 1 partie de phosphite de tributyle comme antioxydant. Puis, on élève la température du mélange réactionnel à 225°C et on maintient cette température jusqu'à séparation de 95% de la quantité théorique d'eau par distillation et obtention d'un polyester clair ayant un indice d'hydroxyle de 50 mg de KOH/g et un indice d'acide de 3 mg de KOH/g.

2e stade.

On introduit ensuite 100,5 parties d'acide 1,4-cyclohexanedicarboxylique dans le mélange réactionnel. Après 2 heures de réaction, on établit progressivement un vide de 50 mm Hg dans le réacteur et on poursuit l'opération sous vide jusqu'à ce que le polyester présente l'indice d'acide souhaité.
Le polyester contenant des groupes carboxyle terminaux ainsi obtenu présente les caractéristiques suivantes :

| | |
|---|---|
| indice d'acide | 20 mg de KOH/g |
| fonctionnalité | 2 |
| $\overline{M}n$ (poids moléculaire moyen en nombre) | 5.600 |
| viscosité ICI à 200°C | 12,5 Pa.s |

(suite)

| | |
|---|---|
| réactivité à 180°C (norme DIN 55.990-section 8) pour un mélange polyester/copolymère acrylique (décrit à l'exemple 15(1)) dans un rapport en poids de 92/8 | 80 secondes |
| coloration selon la norme ASTM D2844 (Gardner) | <1. |

Exemples de référence 2 à 5. Préparation de polyesters contenant des groupes carboxyle terminaux.

Adoptant le mode opératoire décrit à l'exemple 1, on a préparé une série d'autres polyesters contenant des groupes carboxyle terminaux (exemples 2 à 5). Ces différents polyesters, de même que le polyester de l'exemple 1, sont décrits au tableau I, dans lequel on donne successivement la composition (en parties en poids) du polyester contenant des groupes carboxyle terminaux préparé en deux stades, l'indice d'acide (IA), la fonctionnalité, le poids moléculaire moyen en nombre ($\overline{M}n$), la viscosité ICI à 200°C en Pa.s, la coloration dans l'échelle de Gardner et la réactivité à 180°C (DIN 55.990-section 8) du polyester final, cette dernière propriété étant mesurée pour un mélange polyester/copolymère acrylique (décrit à l'exemple 15(1)) dans un rapport en poids de 92/8 lorsque le polyester présente un indice d'acide d'environ 20 mg de KOH/g, dans un rapport en poids de 88/12 lorsque le polyester présente un indice d'acide d'environ 30 mg de KOH/g, et dans un rapport en poids de 82/18 lorsque le polyester présente un indice d'acide d'environ 50 mg de KOH/g.

TABLEAU I.

| Exemples de polyesters | | | | | |
|---|---|---|---|---|---|
| | 1 | 2 | 3 | 4 | 5 |
| 1er stade | | | | | |
| ATP | 616,1 | 606,4 | 562,7 | 565,9 | 542,0 |
| AIP | | | | | 75,3 |
| NPG | 428,5 | 421,8 | 407,9 | 382,4 | 420,6 |
| TMP | | | | 23,7 | |
| 2e stade | | | | | |
| CHDA | 100,5 | 114,7 | 167,6 | 167,8 | 104,4 |
| IA (mg de KOH/g) | 20 | 30 | 50 | 50 | 32 |
| fonctionnalité | 2 | 2 | 2 | 2,5 | 2 |
| $\overline{M}n$ | 5.600 | 3.750 | 2.250 | 2.800 | 3.500 |
| viscosité ICI à 200°C (Pa.s) | 12,5 | 5,2 | 1,9 | 4,2 | 4,4 |
| coloration (Gardner) | <1 | <1 | <1 | <1 | <1 |
| réactivité à 180°C (sec) | 80 | 70 | 42 | 34 | 75 |

Exemples de référence 6 à 14 (comparatifs).

Selon le mode opératoire de l'exemple 1, on a préparé, en deux stades, 9 autres polyesters contenant des groupes carboxyle terminaux et qui sont introduits à titre comparatif.

Au tableau II, on indique successivement la composition (en parties en poids) du polyester contenant des groupes carboxyle terminaux préparé en deux stades, l'indice d'acide (IA), la fonctionnalité, le poids moléculaire moyen en nombre ($\overline{M}n$), la viscosité ICI à 200°C en Pa.s, la coloration dans l'échelle de Gardner et la réactivité à 180°C (DIN 55.990-section 8) du polyester, cette dernière propriété étant mesurée pour un mélange polyester/copolymère acrylique (décrit à l'exemple 15(1)) dans un rapport en poids de 92/8 lorsque le polyester présente un indice d'acide de 20 mg de KOH/g, dans un rapport en poids de 88/12 lorsque le polyester présente un indice d'acide de 30 mg de KOH/g, et dans un rapport en poids de 82/18 lorsque le polyester présente un indice d'acide de 50 mg de KOH/g.

Les polyesters des exemples 6 à 11 sont des polyesters qui ne contiennent pas d'acide 1,4-cyclohexanedicarboxylique. Les polyesters des exemples 6 à 9 sont préparés selon le mode opératoire de l'exemple 1, mais on a remplacé l'acide 1,4-cyclohexanedicarboxylique utilisé au deuxième stade respectivement par de l'acide isophtalique (exemples 6 à 8) et de l'acide adipique (exemple 9), tandis que les polyesters des exemples 10 et 11 sont des polyesters dont les compositions sont pratiquement identiques à celles des polyesters (A-1) et (A-2) respectivement du brevet européen 38.635.

Dans la préparation des polyesters des exemples 12 et 13, l'acide 1,4-cyclohexanedicarboxylique est utilisé dans

le premier stade, soit comme seul acide (exemple 12), soit ensemble avec l'acide téréphtalique (exemple 13), pour la préparation du polyester contenant des groupes hydroxyle terminaux, tandis que l'acide 1,4-cyclohexanedicarboxylique est remplacé par de l'acide isophtalique dans le deuxième stade.

Enfin, le polyester de l'exemple 14 est un polyester contenant des groupes carboxyle terminaux préparé selon le mode opératoire de l'exemple 1, mais le polyester contient 70,5 moles % d'acide téréphtalique (au lieu de 75,5 moles % comme à l'exemple 5), 15,5 moles % d'acide isophtalique (au lieu de 10,5 moles % comme à l'exemple 5) et 14 moles % d'acide 1,4-cyclohexanedicarboxylique, calculés sur le total des acides carboxyliques entrant dans sa composition.

TABLEAU II.

Exemples de polyesters (à titre de comparaison)

| | 6 | 7 | 8 | 9 |
|---|---|---|---|---|
| | | 1er stade | | |
| ATP | 618,9 | 566,7 | 569,5 | 626,4 |
| NPG | 430,5 | 410,8 | 384,8 | 435,7 |
| TMP | | | 23,8 | |
| | | 2e stade | | |
| AIP | 97,3 | 162,5 | 162,5 | |
| Aad | | | | 86,3 |
| IA (mg de KOH/g) | 20 | 50 | 50 | 20 |
| fonctionnalité | 2 | 2 | 2,5 | 2 |
| $\overline{Mn}$ | 5.600 | 2.250 | 2.800 | 5.600 |
| viscosité ICI à 200°C (Pa.s) | 14,5 | 2,2 | 5,5 | 6,3 |
| coloration (Gardner) | <1 | 1 | 1 | 1 |
| réactivité à 180°C (sec) | 31 | 23 | 20 | 70 |

TABLEAU II (suite).

Exemples de polyesters (à titre de comparaison)

| | 10 | 11 | 12 | 13 | 14 |
|---|---|---|---|---|---|
| | | | 1er stade | | |
| ATP | 628,9 | 419,9 | | 574,4 | 506,5 |
| AIP | | | | | 111,2 |
| CHDA | | | 450,6 | 37,4 | |
| Aad | 14,0 | | | | |
| NPG | 428,1 | 236,2 | 136,7 | 422,9 | 420,8 |
| EG | | 138,7 | | | |
| BPAH | | | 410,2 | | |
| | | | 2e stade | | |
| AIP | | 365,0 | 111 | 108,3 | |
| ATM | 68,9 | | | | |
| CHDA | | | | | 104,5 |
| IA (mg de KOH/g) | 35 | 27 | 30 | 31,5 | 32,5 |
| fonctionnalité | 3,1 | 2 | 2 | 2 | 2 |
| $\overline{Mn}$ | 4.950 | 4.150 | 3.750 | 3.550 | 3.450 |
| viscosité ICI à 200°C (Pa.s) | 8,6 | 9,8 | 4,0 | 6,2 | 4,3 |
| coloration (Gardner) | 1 | 1 | <1 | <1 | <1 |
| réactivité à 180°C (sec) | 55 | 90 | 55 | 80 | 75 |

Exemple de référence 15. Préparation de copolymères acryliques contenant des groupes glycidyle.

(1) Dans un réacteur muni d'un thermocouple, d'un agitateur, d'un condensateur à reflux et d'une ampoule à robinet, on introduit 500 parties d'acétate d'éthyle. Par l'ampoule à robinet, on ajoute en l'espace d'une heure un mélange de 284,5 parties de méthacrylate de glycidyle, 137,5 parties de méthacrylate de méthyle, 100 parties d'acrylate de butyle, 22 parties de styrène, 30 parties de dodécylmercaptan et 10 parties de 2,2'-azobis(2-méthylpropionitrile).

Lorsque l'addition est terminée, on maintient le mélange réactionnel pendant une heure à l'ébullition à reflux. Ensuite, on ajoute 10 parties de 2,2'-azobis(2-méthylpropionitrile) et on maintient le mélange réactionnel encore pendant deux heures à reflux. On élimine le solvant par distillation sous vide et on recueille le copolymère acrylique contenant des groupes glycidyle.

Le copolymère acrylique ainsi obtenu se présente sous la forme d'un produit solide, que l'on broie aisément en une poudre blanchâtre. Il présente les caractéristiques suivantes : viscosité ICI de 1,3 Pa.s, $\overline{Mn}$ de 5.400 et un poids équivalent époxy (EEW) de 250.

(2) De la même manière, on prépare un copolymère acrylique à partir d'un mélange de 262,9 parties de méthacrylate de glycidyle, 149,9 parties de méthacrylate de méthyle, 104,0 parties d'acrylate de butyle et 27,2 parties de styrène.

Le copolymère acrylique ainsi obtenu présente les caractéristiques suivantes : viscosité ICI de 2,4 Pa.s, $\overline{M}n$ de 5.250 et un poids équivalent époxy (EEW) de 300.

(3) De la même manière, on prépare un copolymère acrylique à partir d'un mélange de 147,8 parties de méthacrylate de glycidyle, 270,0 parties de méthacrylate de méthyle, 103,5 parties d'acrylate de butyle et 22,8 parties de styrène.

Le copolymère acrylique ainsi obtenu présente les caractéristiques suivantes : viscosité ICI de 1,5 Pa.s, $\overline{M}n$ de 5.000 et un poids équivalent époxy (EEW) de 550.

Exemple 16. Préparation de compositions thermodurcissables en poudre et caractéristiques des enduits de peinture obtenus.

A partir des polyesters conformes à l'invention obtenus aux exemples 1 à 5 et des polyesters non conformes à l'invention obtenus aux exemples 6 à 14, on prépare des poudres pigmentées utilisables pour la fabrication de revêtements par projection à l'aide d'un pistolet pulvérisateur électrostatique, dont la formulation est la suivante :

| | |
|---|---|
| polyester | 502,5 parties |
| copolymère acrylique de l'exemple 15(1) | 167,5 parties |
| dioxyde de titane (Kronos CL2310) | 330,0 parties |
| agent régulateur de fluidité (Acronal 4F) | 13,4 parties |
| benzoïne | 10,0 parties |

On prépare ces poudres par mélange et homogénéisation des divers ingrédients dans une extrudeuse à double vis APV à une température d'environ 100°C. Après refroidissement, l'extrudat est concassé et broyé dans un broyeur à disques dentés et tamisé pour fournir une poudre dont la dimension des particules est comprise entre 10 et 110 micromètres.

Les poudres ainsi obtenues sont appliquées au pistolet pulvérisateur électrostatique sur des plaques en acier doux, en une épaisseur de film de 50 à 70 µm. Les enduits déposés subissent ensuite une cuisson à une température soit de 200°C, soit de 180°C, pendant une durée de 12 minutes. On soumet les revêtements durcis ainsi obtenus aux tests classiques. Les résultats obtenus sont reportés dans le tableau III pour les polyesters des exemples 1 à 14.

Dans le tableau III :

| | |
|---|---|
| la 1ère colonne | donne le n° de l'exemple de préparation du polyester utilisé dans la formulation testée, |
| la 2e colonne | l'épaisseur du revêtement, en µm, |
| la 3e colonne | la température de cuisson en °C (température réelle de l'objet à revêtir), |
| la 4e colonne | la valeur du brillant sous un angle de 60°, en %, selon la norme ASTM D523, |
| la 5e colonne | le comportement du revêtement au pliage sur un mandrin conique de 3 mm, selon la norme ASTM D522, |
| la 6e colonne | la valeur de la résistance au choc inverse, en kg.cm, selon la norme ASTM D2794, |
| la 7e colonne | la valeur de la résistance au choc direct en kg.cm, selon la norme ASTM D2794, |
| la 8e colonne | la valeur obtenue dans l'essai de l'emboutissage Erichsen, selon la norme ISO 1520. |
| la 9e colonne | le nombre de jours après lesquels la valeur du brillant, mesurée sous un angle de 60° selon la norme ASTM D523, n'est plus que de 50%, les revêtements ayant subi un vieillissement accéléré de 2 cycles par jour dans un appareil Q-UV de mesure de vieillissement accéléré (de la Q Panel Co), chaque cycle comprenant une période de 8 heures d'exposition à 4 lampes UV (UVB-313), à 60°C, en atmosphère sèche, suivie d'une période de 4 heures, lampes éteintes, à 40°C et sous 100% d'humidité relative, selon la norme ASTM 53-88. |

TABLEAU III.

Caractéristiques des enduits de peinture.

| Polyester de l'exemple n° | Epaisseur (µm) | Température de cuisson (°C) | Brillant à 60° (%) | Mandrin conique | Choc inverse (kg.cm) | Choc direct (kg.cm) | Emboutissage Erichsen (mm) | Q-UV (jours) |
|---|---|---|---|---|---|---|---|---|
| 1 | 65 | 200 | 90 | passe | 80 | 80 | 9,2 | 18 |
| 2 | 63 | 200 | 90 | passe | 80 | 80 | 9,4 | 17 |
| 3 | 60 | 200 | 92 | passe | 80 | 80 | 9,3 | 19 |
| 4 | 68 | 180 | 91 | passe | 80 | 80 | 9,0 | 16 |
| 5 | 65 | 200 | 90 | passe | 80 | 80 | 9,4 | 20 |
| 6 (1) | 60 | 200 | 89 | - | 0 | 0 | 0,5 | 13 |
| 7 (1) | 59 | 200 | 92 | passe | 0 | 0 | 1,0 | 15 |
| 8 (1) | 63 | 200 | 91 | - | 0 | 0 | 0,3 | 12 |
| 9 (1) | 67 | 200 | 88 | passe | 20 | 0 | 3,0 | 14 |
| 10 (1) | 66 | 200 | 90 | - | <20 | <20 | 2,5 | 15 |
| 11 (1) | 63 | 200 | 89 | - | <20 | <20 | 0,3 | 9 |
| 12 (1) | 62 | 200 | 91 | passe | 0 | 0 | 2,5 | 11 |
| 13 (1) | 64 | 200 | 89 | passe | 20 | 20 | 7,8 | 16 |
| 14 (1) | 65 | 200 | 87 | passe | 20 | 40 | 8,3 | 15 |

(1) à titre comparatif

Les résultats du tableau III montrent que seules les compositions thermodurcissables en poudre conformes à l'invention (polyesters des exemples 1 à 5) donnent des revêtements présentant un brillant élevé, d'excellentes propriétés mécaniques et en même temps un bon comportement vis-à-vis des intempéries. En effet, les compositions en poudre qui renferment des polyesters non conformes à l'invention donnent des revêtements dont les propriétés mécaniques sont nettement inférieures.

On voit par exemple que lorsqu'on remplace l'acide 1,4-cyclohexanedicarboxylique au deuxième stade de la préparation des polyesters par de l'acide isophtalique (exemples 6 à 8) ou par de l'acide adipique (exemple 9), que les résultats de l'essai de résistance au choc et de l'emboutissage Erichsen sont franchement médiocres. Il en est de même pour les compositions renfermant les polyesters des exemples 10 et 11, dont les compositions sont très similaires à celles des polyesters du brevet européen 38.635.

Les résultats montrent également qu'il n'est pas possible d'obtenir une bonne résistance au choc avec des polyesters dans lesquels l'acide 1,4-cyclohexanedicarboxylique est utilisé dans le premier stade de synthèse et non dans le deuxième stade (cf. polyesters des exemples 12 et 13).

Enfin, on voit que le polyester ne peut pas contenir moins de 75 moles % d'acide téréphtalique et plus de 14 moles % d'acide isophtalique par rapport au total des acides carboxyliques entrant dans sa composition, parce que le remplacement progressif d'une quantité de plus en plus importante d'acide téréphtalique par de l'acide isophtalique conduit à des revêtements qui présentent une résistance au choc direct et inverse nettement moins bonne (comparer les résultats de l'essai de résistance au choc obtenus avec le polyester de l'exemple 14 qui renferme 70,5 moles % d'acide téréphtalique, avec ceux obtenus avec le polyester de l'exemple 5 qui contient 75,5 moles % d'acide téréphtalique).

Exemple 17.

On prépare les compositions thermodurcissables en poudre A et B dont les formulations sont données ci-dessous, selon le mode opératoire de l'exemple 16 à partir du polyester conforme à l'invention de l'exemple 3 et des copolymères acryliques de l'exemple 15(2) et de l'exemple 15(3).

| | Composition (parties en poids) | |
|---|---|---|
| | A | B |
| polyester de l'exemple 3 | 469 | 402 |
| copolymère acrylique de l'exemple 15(2) | 201 | |
| copolymère acrylique de l'exemple 15(3) | | 268 |
| dioxyde de titane (Kronos CL2310) | 330,0 | 330,0 |
| agent régulateur de fluidité (Acronal 4F) | 13,4 | 13,4 |
| benzoïne | 10,0 | 10,0 |

Au tableau IV, on donne les caractéristiques des revêtements obtenus à partir des compositions A et B dans les mêmes conditions qu'à l'exemple 16 et testés sur des plaques en acier doux.

TABLEAU IV

| Caractéristiques des enduits de peinture | | |
|---|---|---|
| | Composition en poudre | |
| | A | B |
| Epaisseur (µm) | 65 | 60 |
| Température de cuisson (°C) | 200 | 200 |
| Brillant à 60°(%) | 91 | 90 |
| Mandrin conique | passe | passe |
| Choc inverse (kg.cm) | 80 | 80 |
| Choc direct (kg.cm) | 80 | 80 |
| Emboutissage Erichsen (mm) | 9,2 | 9 |
| Q-UV (jours) | 19 | 21 |

## Revendications

**1.** Compositions thermodurcissables en poudre comprenant

(a) un polyester contenant des groupes carboxyle terminaux et (b) un copolymère acrylique contenant des groupes glycidyle caractérisé en ce que le polyester (a)

(1) présente un indice d'acide de 15 à 70 mg de KOH/g ;
(2) est préparé en deux stades, en préparant d'abord dans un premier stade, un polyester contenant des groupes hydroxyle terminaux à partir d'au moins un acide polycarboxylique autre que l'acide 1,4-cyclohexanedicarboxylique et d'au moins un polyol aliphatique ou cycloaliphatique et en estérifiant ensuite dans un deuxième stade, le polyester contenant des groupes hydroxyle terminaux ainsi obtenu avec de l'acide 1,4-cyclohexanedicarboxylique exclusivement ; et
(3) contient au moins 75 moles % d'acide téréphtalique, au moins 10 moles % d'acide 1,4-cyclohexanedicarboxylique et au plus 14 moles % d'au moins un autre acide polycarboxylique aromatique et/ou aliphatique et/ou cycloaliphatique, par rapport au total des acides carboxyliques entrant dans sa composition.

**2.** Compositions selon la revendication 1, caractérisées en ce que le polyester (a) contenant des groupes carboxyle terminaux possède un poids moléculaire moyen en nombre compris entre 1.500 et 12.000.

**3.** Compositions selon l'une quelconque des revendications 1 et 2, caractérisées en ce que le polyester (a) contenant des groupes carboxyle terminaux contient 75 à 90 moles % d'acide téréphtalique et 10 à 25 moles % d'acide 1,4-cyclohexanedicarboxylique par rapport au total des acides carboxyliques.

**4.** Compositions selon l'une quelconque des revendications 1 à 3, caractérisées en ce que le polyester (a) contenant des groupes carboxyle terminaux contient jusqu'à 14 moles % d'au moins un acide polycarboxylique aromatique et/ou aliphatique et/ou cycloaliphatique choisi parmi l'acide succinique, l'acide glutarique, l'acide adipique, l'acide fumarique, l'acide maléique, l'acide isophtalique, l'acide 1,2-cyclohexanedicarboxylique, l'acide 1,3-cyclohexanedicarboxylique, l'acide trimellitique, l'acide pyromellitique, l'acide trimésique et leurs anhydrides correspondants.

**5.** Compositions selon l'une quelconque des revendications 1 à 4, caractérisées en ce que le constituant alcoolique du polyester (a) est un polyol cycloaliphatique ou aliphatique choisi parmi l'éthylène glycol, le diéthylène glycol, le 1,2-propanediol, le 1,3-propanediol, le 1,4-butanediol, le 2-méthyl-1,3-propanediol, le néopentyl glycol, le 1,5-pentanediol, le 3-méthyl-1,5-pentanediol, le 2-butyl-2-éthyl-1,3-propanediol, le 1,6-hexanediol, le 1,4-cyclohexanediméthanol, le 1,4-cyclohexanediol, l'hydroxypivalate de néopentyl glycol, le bisphénol A hydrogéné, le triméthylolpropane, le ditriméthylolpropane, le pentaérythritol et leurs mélanges.

**6.** Compositions selon l'une quelconque des revendications 1 à 5, caractérisées en ce que le copolymère acrylique (b) contenant des groupes glycidyle est obtenu à partir de méthacrylate de glycidyle et/ou d'acrylate de glycidyle, d'au moins un acrylate ou méthacrylate d'alkyle dans lequel le radical alkyle contient de 1 à 18 atomes de carbone et éventuellement d'un monomère éthyléniquement mono-insaturé différent du (méth)acrylate de glycidyle et du (méth)acrylate d'alkyle.

**7.** Compositions selon la revendication 6, caractérisées en ce que le monomère éthyléniquement mono-insaturé est choisi parmi le styrène, le vinyltoluène, le diméthylstyrène, l'α-méthylstyrène, l'acrylate ou le méthacrylate d'hydroxyéthyle, l'acrylate ou le méthacrylate d'hydroxypropyle, l'acrylonitrile, l'acrylamide, l'acétate de vinyle, seuls ou en mélange.

**8.** Compositions selon l'une quelconque des revendications 1 à 7, caractérisées en ce que le copolymère acrylique (b) contenant des groupes glycidyle est obtenu à partir d'environ 45 à 70 % en poids de méthacrylate de glycidyle et/ou d'acrylate de glycidyle, d'environ 5 à 55 % en poids d'au moins un acrylate ou méthacrylate d'alkyle et d'environ 0 à 25 % en poids de monomère éthyléniquement mono-insaturé.

**9.** Compositions selon l'une quelconque des revendications 1 à 8, caractérisées en ce que le copolymère acrylique (b) contenant des groupes glycidyle possède un poids moléculaire moyen en nombre compris entre 2.000 et 8.000 et un poids équivalent époxy compris entre 125 et 1.500, de préférence entre 200 et 1.100.

**10.** Compositions selon l'une quelconque des revendications 1 à 9, caractérisées en ce que le rapport en poids entre

le polyester (a) contenant des groupes carboxyle terminaux et le copolymère acrylique (b) contenant des groupes glycidyle est de 0,1 à 9, de préférence de 1,5 à 4 parties en poids de polyester (a) pour 1 partie de copolymère acrylique (b).

**11.** Compositions selon l'une quelconque des revendications 1 à 10, caractérisées en ce qu'elles contiennent de 10% à 90%, de préférence de 60% à 80% en poids de polyester (a) et de 90% à 10%, de préférence de 40% à 20% en poids de copolymère (b) par rapport au poids total du polyester et du copolymère acrylique.

**12.** Vernis et peintures obtenus avec les compositions thermodurcissables en poudre selon l'une quelconque des revendications 1 à 11.

**13.** Procédé de revêtement d'un article, de préférence métallique, caractérisé en ce qu'on applique sur ledit article une composition thermodurcissable en poudre selon l'une quelconque des revendications 1 à 11, par dépôt par pulvérisation au pistolet électrostatique ou tribo-électrique ou par dépôt en lit fluidisé et en ce qu'on fait subir au revêtement ainsi obtenu une cuisson à une température de 150 à 200°C, pendant une durée de 10 à 30 minutes.

**14.** Articles revêtus entièrement ou partiellement par le procédé selon la revendication 13.

## Claims

**1.** A thermosetting powder composition comprising:
(a) a carboxy terminated polyester and (b) a glycidylated acrylic copolymer, characterized in that the polyester (a):

(1) has an acid value of 15 to 70 mg of KOH/g ;
(2) is prepared in two stages, in the first of which a hydroxyl-terminated polyester is prepared from at least one polycarboxylic acid, other than 1,4-cyclohexanedicarboxylic acid, and at least one aliphatic or cycloaliphatic polyol, and, in the second stage, the resulting hydroxyl-terminated polyester is esterified with 1,4-cyclohexane-dicarboxylic acid, exclusively, and;
(3) comprises, as proportions of the total quantity of carboxylic acids therein, at least 75 mole % terephthalic acid, at least 10 mole % 1,4-cyclohexanedicarboxylic acid and up to 14 mole % of at least one other aromatic and/or aliphatic and/or cycloaliphatic polycarboxylic group.

**2.** A composition as claimed in claim 1, characterized in that the carboxyl-terminated polyester (a) has a number-average molecular weight of between 1,500 and 12,000.

**3.** A composition as claimed in any of the preceding claims, characterized in that the carboxyl-terminated polyester (a) comprises 75 to 90 mole % of terephthalic acid and 10 to 25 mole % 1,4-cyclohexanedicarboxylic acid.

**4.** A composition as claimed in any of the preceding claims, characterized in that the carboxyl-terminated polyester (a) comprises up to 14 mole % of at least one aromatic and/or aliphatic and/or cycloaliphatic polycarboxylic acid selected from succinic acid, glutaric acid, adipic acid, fumaric acid, maleic acid, isophthalic acid, 1,2-cyclohexanedicarboxylic acid, 1,3-cyclohexanedicarboxylic acid, trimellitic acid, pyromellitic acid, trimesic acid and the corresponding anhydrides thereof.

**5.** A composition as claimed in any of the preceding claims, characterized in that the alcohol component of the polyester (a) is a cycloaliphatic or aliphatic polyol selected from ethylene glycol, diethylene glycol, 1,2-propanediol, 1,3-propanediol, 1,4-butanediol, 2,methyl- 1,3-propanediol, neopentyl glycol, 1,5-pentanediol, 3-methyl- 1,5-pentanediol, 2-butyl-2-ethyl-1,3-propanediol, 1,6- hexanediol, 1-4 cyclohexane-dimethanol, 1,4-cyclohexanediol, neopentyl glycol hydroxypivalate, hydrogenated bisphenol A, trimethylolpropane, ditrimethylolpropane, pentaerythritol and mixtures thereof.

**6.** A composition as claimed in any of the preceding claims, characterized in that the glycidyl group-containing acrylic copolymer (b) is formed from glycidyl methacrylate and/or glycidyl acrylate, at least one alkyl acrylate or methacrylate, in which the alkyl radical contains 1 to 18 carbon atoms, and, optionally, an ethylenically mono-unsaturated monomer different from the glycidyl (meth)acrylate and the alkyl (meth)acrylate.

**7.** A composition as claimed in claim 6, characterized in that the ethylenically mono-unsaturated monomer is selected

from styrene, vinyltoluene, dimethylstyrene, α-methylstyrene, hydroxyethyl acrylate or methacrylate, hydroxypropyl acrylate or methacrylate, acrylonitrile, acrylamide, vinyl acetate, and mixtures thereof.

8. A composition as claimed in any of the preceding claims, characterized in that the glycidyl group-containing acrylic copolymer (b) is formed from about 45 to 70% by weight of glycidyl methacrylate and/or glycidyl acrylate, about 5 to 55% by weight of at least one alkyl acrylate or methacrylate and about 0 to 25% by weight of an ethylenically mono-unsaturated monomer.

9. A composition as claimed in any of the preceding claims, characterized in that the glycidyl group-containing acrylic copolymer (b) has a number-average molecular weight in the range of from 2,000 to 8,000 and an epoxy equivalent weight of from 125 to 1,500, and preferably between 200 and 1,100.

10. A composition as claimed in any of the preceding claims, characterized in that the weight ratio of carboxyl-terminated polyester (a) to glycidyl group-containing acrylic copolymer (b) is 0.1 to 9, preferably 1.5 to 4, parts by weight of polyester (a) to one part of acrylic copolymer (b).

11. A composition as claimed in any of the preceding claims, characterized in that it comprises from 10% to 90%, preferably from 60% to 80% by weight of polyester (a) and from 90% to 10%, preferably from 40% to 20% by weight of copolymer (b), with respect to the total weight of polyester and acrylic copolymer.

12. A varnish or paint comprising a thermosetting powder composition as claimed in any of the preceding claims.

13. A process for coating an article, preferably a metal article, characterized in that it comprises applying a thermosetting powder composition, as claimed in any of claims 1 to 11, to said article by spray coating with an electrostatic or tribo-electric spray gun, or by deposition in a fluidized bed, and curing the resulting coating at a temperature of 150 to 200 °C for a period of 10 to 30 minutes.

14. An article coated entirely or partially by a process as claimed in claim 13.

**Patentansprüche**

1. Wärmehärtbare pulverförmige Zusammensetzungen, die

   (a) einen Polyester mit endständigen Carboxylgruppen und
   (b) ein Acrylcopolymer mit Glycidylgruppen

   umfassen, dadurch gekennzeichnet, daß der Polyester (a)

   (1) eine Säurezahl von 15 bis 70 mg KOH/g aufweist,
   (2) in zwei Stufen hergestellt wird, indem man zunächst in einer ersten Stufe einen Polyester mit endständigen Hydroxylgruppen aus wenigstens einer von der 1,4-Cyclohexandicarbonsäure verschiedenen Polycarbonsäure und wenigstens einem aliphatischen oder cycloaliphatischen Polyol herstellt und indem man danach in einer zweiten Stufe den so erhaltenen Polyester mit endständigen Hydroxylgruppen ausschließlich mit 1,4-Cyclohexandicarbonsäure verestert, und
   (3) bezogen auf die gesamten Carbonsäuren in der Zusammensetzung, wenigstens 75 Mol-% Terephthalsäure, wenigstens 10 Mol-% 1,4-Cyclohexandicarbonsäure und höchstens 14 Mol-% wenigstens einer anderen aromatischen und/oder aliphatischen und/oder cycloaliphatischen Polycarbonsäure enthält.

2. Zusammensetzungen gemäß Anspruch 1, dadurch gekennzeichnet, daß der Polyester (a) mit endständigen Carboxylgruppen ein Zahlenmittel des Molekulargewichts zwischen 1.500 und 12.000 besitzt.

3. Zusammensetzungen gemäß einem der Ansprüche 1 und 2, dadurch gekennzeichnet, daß der Polyester (a) mit endständigen Carboxylgruppen, bezogen auf die gesamten Carbonsäuren, 75 bis 90 Mol-% Terephthalsäure und 10 bis 25 Mol-% 1,4-Cyclohexandicarbonsäure enthält.

4. Zusammensetzungen gemäß einem der Ansprüche 1 bis 3, dadurch gekennzeichnet, daß der Polyester (a) mit endständigen Carboxylgruppen bis zu 14 Mol-% wenigstens einer aromatischen und/oder aliphatischen und/oder

cycloaliphatischen Polycarbonsäure, die unter der Bernsteinsäure, Glutarsäure, Adipinsäure, Fumarsäure, Maleinsäure, Isophthalsäure, 1,2-Cyclohexandicarbonsäure, 1,3-Cyclohexandicarbonsäure, Trimellitsäure, Pyromellitsäure, Trimesinsäure und deren entsprechenden Anhydriden ausgewählt ist, enthält.

**5.** Zusammensetzungen gemäß einem der Ansprüche 1 bis 4, dadurch gekennzeichnet, daß der Alkohol-Bestandteil des Polyesters (a) ein cycloaliphatisches oder aliphatisches Polyol ist, das unter Ethylenglykol, Diethylenglykol, 1,2-Propandiol, 1,3-Propandiol, 1,4-Butandiol, 2-Methyl-1,3-propandiol, Neopentylglykol, 1,5-Pentandiol, 3-Methyl-1,5-pentandiol, 2-Butyl-2-ethyl-1,3-propandiol, 1,6-Hexandiol, 1,4-Cyclohexandimethanol, 1,4-Cyclohexandiol, Neopentylglykolhydroxypivalat, hydriertem Bisphenol A, Trimethylolpropan, Ditrimethylolpropan, Pentaerythritol und deren Gemischen ausgewählt ist.

**6.** Zusammensetzungen gemäß einem der Ansprüche 1 bis 5, dadurch gekennzeichnet, daß das Acrylcopolymer (b) mit Glycidylgruppen aus Glycidylmethacrylat und/oder Glycidylacrylat, wenigstens einem Alkylacrylat oder -methacrylat, in dem der Alkylrest 1 bis 18 Kohlenstoffatome enthält, und gegebenenfalls einem ethylenisch einfach ungesättigten Monomer, das von Glycidyl(meth)acrylat und Alkyl(meth)acrylat verschieden ist, erhalten wird.

**7.** Zusammensetzungen gemäß Anspruch 6, dadurch gekennzeichnet, daß das ethylenisch einfach ungesättigte Monomer unter Styrol, Vinyltoluol, Dimethylstyrol, $\alpha$-Methylstyrol, Hydroxyethylacrylat oder -methacrylat, Hydroxypropylacrylat oder -methacrylat, Acrylnitril, Acrylamid, Vinylacetat, einzeln oder im Gemisch, ausgewählt ist.

**8.** Zusammensetzungen gemäß einem der Ansprüche 1 bis 7, dadurch gekennzeichnet, daß das Acrylcopolymer (b) mit Glycidylgruppen aus etwa 45 bis 70 Gew.-% Glycidylmethacrylat und/oder Glycidylacrylat, etwa 5 bis 55 Gew.-% wenigstens eines Alkylacrylats oder -methacrylats und etwa 0 bis 25 Gew.-% ethylenisch einfach ungesättigtem Monomer erhalten wird.

**9.** Zusammensetzungen gemäß einem der Ansprüche 1 bis 8, dadurch gekennzeichnet, daß das Acrylcopolymer (b) mit Glycidylgruppen ein Zahlenmittel des Molekulargewichts zwischen 2.000 und 8.000 und ein Epoxyäquivalentgewicht zwischen 125 und 1.500, vorzugsweise zwischen 200 und 1.100, besitzt.

**10.** Zusammensetzungen gemäß einem der Ansprüche 1 bis 9, dadurch gekennzeichnet, daß das Gewichtsverhältnis zwischen dem Polyester (a) mit endständigen Carboxylgruppen und dem Acrylcopolymer (b) mit Glycidylgruppen 0,1 bis 9, vorzugsweise 1,5 bis 4 Gewichtsteile Polyester (a) pro 1 Teil Acrylcopolymer (b) beträgt.

**11.** Zusammensetzungen gemäß einem der Ansprüche 1 bis 10, dadurch gekennzeichnet, daß sie, bezogen auf das Gesamtgewicht des Polyesters und des Acrylcopolymers, 10 bis 90 Gew.-%, vorzugsweise 60 bis 80 Gew.-%, Polyester (a) und 90 bis 10 Gew.-%, vorzugsweise 40 bis 20 Gew.-%, Copolymer (b) enthalten.

**12.** Lacke und Farben, die mit den wärmehärtbaren pulverförmigen Zusammensetzungen gemäß einem der Ansprüche 1 bis 11 erhalten werden.

**13.** Verfahren zur Beschichtung eines vorzugsweise metallischen Gegenstandes, dadurch gekennzeichnet, daß man eine wärmehärtbare pulverförmige Zusammensetzung gemäß einem der Ansprüche 1 bis 11 durch Abscheidung mittels Spritzen mit der elektrostatischen oder triboelektrischen Pistole oder durch Abscheidung im Fließbett auf besagten Gegenstand aufbringt, und dadurch, daß man die so erhaltene Beschichtung bei einer Temperatur von 150 bis 200 °C während einer Dauer von 10 bis 30 Minuten aushärtet.

**14.** Durch das Verfahren gemäß Anspruch 13 vollständig oder teilweise beschichtete Gegenstände.